(19) Europäisches Patentamt
European Patent Office
Office européen des brevets

(11) **EP 3 739 300 B1**

(12) **EUROPÄISCHE PATENTSCHRIFT**

(45) Veröffentlichungstag und Bekanntmachung des Hinweises auf die Patenterteilung:
**19.11.2025   Patentblatt 2025/47**

(21) Anmeldenummer: **20163975.4**

(22) Anmeldetag: **18.03.2020**

(51) Internationale Patentklassifikation (IPC):
**G01D 5/38** *(2006.01)*        **G01D 5/34** *(2006.01)*

(52) Gemeinsame Patentklassifikation (CPC):
**G01D 5/344; G01D 5/38**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **14.05.2019   DE 102019206937**

(43) Veröffentlichungstag der Anmeldung:
**18.11.2020   Patentblatt 2020/47**

(73) Patentinhaber: **Dr. Johannes Heidenhain GmbH 83301 Traunreut (DE)**

(72) Erfinder: **KÄLBERER, Thomas 86529 Schrobenhausen (DE)**

(56) Entgegenhaltungen:
**DE-A1- 102010 063 253**

**Beschreibung**

## GEBIET DER TECHNIK

Die vorliegende Erfindung betrifft eine optische Positionsmesseinrichtung, die zur Bestimmung der Relativposition zweier zueinander beweglicher Objekte geeignet ist.

## STAND DER TECHNIK

In bekannten hochgenauen optischen Positionsmesseinrichtungen werden neben intensitätsbezogenen Auswertemethoden auch polarisationsoptische Methoden zur Erzeugung von drei oder mehreren phasenverschobenen, verschiebungsabhängigen Abtastsignalen zur Positionsbestimmung verwendet. Im Hinblick auf die polarisationsoptische Erzeugung von Abtastsignalen sei etwa auf die EP 0 481 356 A2 der Anmelderin verwiesen.

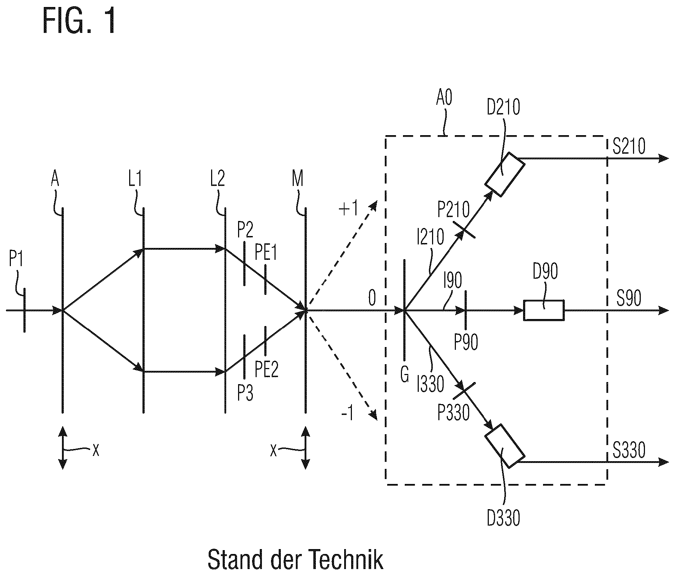

Das der Signalerzeugung gemäß der EP 0 481 356 A2 zugrundeliegende Prinzip ist in Figur 1 in einer schematisierten Darstellung des entfalteten Abtaststrahlengangs gezeigt. Die Gitter A, M sind hier entlang der angegebenen Messrichtung x zusammen gegenüber den restlichen Komponenten L1, L2, AO relativ beweglich angeordnet. Das von links einfallende, über den Polarisator P1 definiert polarisierte Strahlenbündel wird zunächst über das Gitter A in zwei Teilstrahlenbündel aufgespalten. Wie aus Figur 1 ersichtlich, werden in den Strahlverlauf der zur Interferenz zu bringenden Teilstrahlenbündel, in welchen die Positionsinformation kodiert ist, separate polarisationsoptische Bauelemente eingebracht, beispielsweise unterschiedlich orientierte Lambda/4-Platten PE1, PE2. Die Lambda/4-Platten PE1, PE2 polarisieren die beiden durchlaufenden Teilstrahlenbündel orthogonal zueinander, d.h. die beiden Teilstrahlenbündel sind dann z.B. links- und rechtszirkular polarisiert. Diese beiden Teilstrahlenbündel werden dann zu einem gemeinsamen Signalstrahlenbündel (0) überlagert und in einer nachfolgenden Detektionseinheit bzw. Auswerteoptik AO in drei oder mehr überlagerte Teilstrahlenbündel I90, I210, I330 aufgespalten. Nach dem Durchlaufen unterschiedlich orientierter Polarisatoren P90, P210, P330 resultieren an den Detektorelementen D90, D210, D330 schließlich um jeweils 120° phasenverschobene Abtastsignale S90, S210, S330, die in bekannter Art und Weise weiterverarbeitbar sind. Oft werden neben den Lambda/4-Platten PE1, PE2 in den Strahlengängen der aufgespaltenen Teilstrahlenbündel noch weitere polarisationsoptische Bauelemente in Form von Polarisatoren P2, P3 angeordnet, um darüber Fehlpolarisationen zu kompensieren, die durch von den Teilstrahlenbündeln vorher durchlaufene Gitter A, L1, L2 verursacht wurden.

Als nachteilig an einer derartigen polarisationsoptischen Erzeugung von mehreren phasenverschobenen, verschiebungsabhängigen Abtastsignalen erweist sich die Notwendigkeit, separate bzw. zusätzliche optische Elemente wie Lambda/4-Platten und Polarisatoren in den Abtaststrahlengang bzw. in den Abtastspalt zwischen den relativ zueinander bewegten Komponenten einbringen zu müssen. Bei begrenztem Bauvolumen der entsprechenden optischen Positionsmesseinrichtung oder einem geringen vorgesehenen Abtastabstand können derartige zusätzliche Bauelemente problematisch sein. Soll die Positionsmesseinrichtung analog zu den bekannten Prinzipien aus der WO 2008/138501 A1 aufgebaut werden, sind die Komponenten A, M und L1, L2 aus Figur 1 als zwei gegeneinander verschiebbare Maßverkörperungen ausgebildet. In diesem Fall ist eine mechanische Halterung von dazwischenliegenden, stationären polarisationsoptischen Bauelementen dann oft nicht möglich.

Die zusätzlichen polarisationsoptischen Bauelemente im Abtaststrahlengang stellen desweiteren auch erhöhte Anforderungen an Ebenheit, Parallelität und Homogenität der eingesetzten Trägerstrukturen; erforderlich sind driftfreie und stabile Montageflächen zur Aufnahme dieser Trägerstrukturen. Mögliche Materialfehler sind hier nur mit sehr hohem zusätzlichem Aufwand über entsprechende Kalibrierverfahren kompensierbar. Dies gilt insbesondere dann, wenn in entsprechenden optischen Positionsmesseinrichtungen lange translationsinvariante Maßstäbe verwendet werden.

Weitere Systemeigenschaften wie Eigenfrequenzen oder Luftströmungen im Abtastspalt können durch zusätzlich erforderliche polarisationsoptische Bauelemente in den Abtaststrahlengängen darüber hinaus ebenfalls negativ beeinflusst werden.

Eine optische Positionsmesseinrichtung mit polarisationsoptischer Erzeugung phasenverschobener Abtastsignale ohne separate bzw. zusätzliche polarisationsoptische Bauelemente in den Abtaststrahlengängen ist bereits in der DE 10 2010 063 253 A1 der Anmelderin vorgeschlagen worden. Gemäß dieser Lösung sind die erforderlichen polarisationsoptischen Bauelemente in andere Komponenten des Abtaststrahlengangs integriert ausgebildet, beispielsweise in Form von Hochfrequenzgittern mit periodisch variierenden Strukturen. In einer derartigen Positionsmesseinrichtung besitzen die verwendeten Komponenten in Messrichtung positionsabhängige Polarisationseigenschaften; beispielsweise kann hierbei vorgesehen sein, dass die Maßverkörperung als Polarisationsgitter fungiert. Diese besteht dann z.B. aus mehreren lokal veränderlichen Schichten und umfasst ein Hochfrequenzgitter mit einer Teilungsperiode $d_R < \lambda/2$, welches nur eine 0. Beugungsordnung besitzt und die polarisationsoptische Funktionalität erzeugt. Die Gitterorientierung des Hochfrequenzgitters verändert sich dabei entlang der Messrichtung mit der Polarisations-Periode $d_P$, die deutlich größer sein muss als die Breite $hw_{Spot}$ des beleuchteten Bereichs der Maßverkörperung, welche die Signalperiode SP der erzeugbaren Abtastsignale nach unten begrenzt; d.h. es muss hier die Beziehung $d_P > hw_{Spot}$ eingehalten werden. Die an unterschiedlichen Stellen der Maßverkörperung auftreffenden Teilstrahlenbündel erfahren somit lokal unterschiedliche polarisationsoptische Wirkungen, wobei die Polarisationsvariation hierbei exakt an den jeweiligen Abtastabstand angepasst werden muss. Hierzu wird der Abstand der Auftreffpunkte der Teilstrahlenbündel so gewählt, dass dieser der halben Gitterperiode der Maßverkörperung entspricht. Im Fall einer Änderung des Abtastabstands resultieren Beeinträchtigungen im Modulationsgrad der Abtastsignale sowie Veränderungen in weiteren Signaleigenschaften.

Eine weitere optische Positionsmesseinrichtung mit polarisationsoptischer Erzeugung phasenverschobener Abtastsignale ohne zusätzliche diskrete polarisationsoptische Bauelemente in den Abtaststrahlengängen ist schließlich auch bereits aus der DE 10 2014 211 004 A1 der Anmelderin bekannt geworden. Gemäß dieser Druckschrift kann unter bestimmten Bedingungen die Beugung an Gittern auf Seiten der Maßverkörperung oder der Abtastplatte einer optischen Positionsmesseinrichtung genutzt werden, um in den gebeugten Teilstrahlenbündeln bestimmte Polarisationszustände einzustellen, z.B. entgegengesetzte zirkulare Polarisationszustände. Hierzu sind zum einen jedoch bestimmte Einfallsbedingungen bezüglich des aufzuspaltenden Strahlenbündels einzuhalten; zum anderen muss das entsprechende Gitter zur Einstellung gewünschter Polarisationseigenschaften in den gebeugten Teilstrahlenbündeln eine sehr kleine Gitterperiode aufweisen. Damit unterliegt diese Möglichkeit zur Erzeugung polarisationsoptischer Wirkungen auf die Teilstrahlenbündel bestimmten Einschränkungen und kann nicht für jedes Abtastprinzip genutzt werden.

## ZUSAMMENFASSUNG DER ERFINDUNG

Der vorliegenden Erfindung liegt die Aufgabe zugrunde, eine optische Positionsmesseinrichtung anzugeben, die zur polarisationsoptischen Erzeugung phasenverschobener Abtastsignale keine zusätzlichen polarisationsoptischen Bauelemente im Abtaststrahlengang erfordert und den Einsatz unterschiedlicher optischer Abtastprinzipien ermöglicht. Die eingestellten Polarisationszustände in den verschiedenen Teilstrahlenbündeln sollten auch bei sich ändernden Abtastverhältnissen möglichst unverändert bleiben und damit eine gleichbleibende Qualität der erzeugten Abtastsignale gewährleisten.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Erfassung der Relativposition zweier zueinander entlang mindestens einer Messrichtung beweglichen Objekte, die mit einem ersten Gitter und einem zweiten Gitter verbunden sind. An einem Gitter erfolgt eine Aufspaltung eines von einer Lichtquelle emittierten Beleuchtungsstrahlenbündels in mindestens zwei Teilstrahlenbündel; die Teilstrahlenbündel erfahren unterschiedliche polarisationsoptische Wirkungen, nach einer Wiedervereinigung der unterschiedlich polarisierten Teilstrahlenbündel an einem Gitter sind aus dem resultierenden Signalstrahlenbündel in einer Detektionseinheit mehrere phasenverschobene, verschiebungsabhängige Abtastsignale erzeugbar. In den Abtaststrahlengängen der Teilstrahlenbündel sind zwischen Aufspaltung und Wiedervereinigung keine separaten polarisationsoptischen Bauelemente angeordnet. Mindestens eines der durchlaufenen Gitter ist als Polarisationsgitter zur Erzeugung der unterschiedlichen polarisationsoptischen Wirkungen auf die Teilstrahlenbündel ausgebildet. Dabei ist das Polarisationsgitter derart ausgebildet, dass ortsunabhängig auf dem Polarisationsgitter Beugungsordnungen mit unterschiedlichen Polarisationszuständen resultieren. Das Polarisationsgitter weist sowohl entlang der Messrichtung als auch orthogonal zur Messrichtung periodisch angeordnete Gitterstrukturen auf, wobei die Orthogonal-Periodizität ($\Lambda\_ortho$) gemäß

$$\Lambda\_ortho < 1.5 \cdot \lambda$$

gewählt ist, mit
$\Lambda\_ortho :=$ Orthogonal-Periodizität der Gitterstrukturen
$\lambda :=$ Wellenlänge der verwendeten Lichtquelle.

Es kann vorgesehen sein, dass das Polarisationsgitter eine Mehrzahl von bogenförmig gekrümmten Gitterstrukturen in Form von Gitterstegen und Gitterlücken umfasst, deren Längserstreckungsrichtung jeweils parallel zur Messrichtung orientiert ist.

Dabei ist es möglich, dass das Polarisationsgitter parallel zur Messrichtung periodisch mit einer Messrichtungs-Periodizität angeordnete, streifenförmige Gitterabschnitte aufweist, deren Längserstreckungsrichtung senkrecht zur Messrichtung orientiert ist, wobei in den Gitterabschnitten die Gitterstrukturen senkrecht zur Messrichtung periodisch mit der Orthogonal-Periodizität angeordnet sind.

Ferner kann vorgesehen sein, dass zwischen benachbarten Gitterabschnitten des Polarisationsgitters

- eine Gitterlücke angeordnet ist, oder
- ein Gittersteg angeordnet ist, oder
- alternierend benachbart mehrere Gitterlücken und Gitterstege angeordnet sind.

Alternativ hierzu ist möglich, dass Gitterstrukturen benachbarter Gitterabschnitte aneinander grenzen.

Weiterhin kann vorgesehen sein, dass das Flächenfüllverhältnis FV des Polarisationsgitters gemäß der Beziehung FV < 0.6 gewählt ist, wobei das Flächenfüllverhältnis FV als Verhältnis der Fläche der Gitterstege in einer Polarisationsgitter-Einheitszelle zur Gesamtfläche der Polarisationsgitter-Einheitszelle definiert ist.

Es ist desweiteren möglich, dass das Polarisationsgitter als Reflexions-Phasengitter ausgebildet ist, dessen Gitterstege und Gitterlücken unterschiedliche Reflexionseigenschaften aufweisen.

In einer bevorzugten Ausführungsform kann das Reflexions-Phasengitter mindestens die nachfolgenden Komponenten umfassen:

- ein Trägersubstrat,
- eine auf dem auf dem Trägersubstrat angeordnete flächige Reflektorschicht,
- eine oberhalb der Reflektorschicht angeordnete Gitterstrukturschicht.

Hierbei kann die Gitterstrukturschicht eine Schichtdicke d aufweisen, die gemäß der Beziehung d < 0.6 · λ gewählt ist, wobei λ die Wellenlänge der verwendeten Lichtquelle angibt.

Desweiteren kann vorgesehen sein, dass zwischen der flächigen Reflektorschicht und der Gitterstrukturschicht eine flächige Phasenschiebeschicht angeordnet ist.

Ferner ist möglich,

- dass die Reflektorschicht aus einer metallischen Reflektorschicht oder aus einem reflektierenden Schichtstapel besteht und
- dass die Gitterstrukturschicht aus einem dielektrischen Material der Gruppe $SiO_2$, $TaO_x$, $TiO_2$, Si oder aus einem Halbleiter-Material der Gruppe TiN, GaN oder aus einem Schichtstapel mit einem oder mehreren der vorgenannten dielektrischen Materialien und einem oder mehreren der vorgenannten Halbleiter-Materialien besteht.

Mit Vorteil ist das Polarisationsgitter derart ausgebildet, dass resultierende +/-1. Beugungsordnungen orthogonal zueinander polarisiert sind.

In einer weiteren Ausführungsform der erfindungsgemäßen optischen Positionsmesseinrichtung ist vorgesehen, dass

- ein erstes Objekt mit einem ersten Gitter verbunden ist, das als Reflexions-Phasengitter oder Transmissions-Phasengitter ausgebildet ist,
- ein zweites Objekt mit einem als Polarisationsgitter fungierenden zweiten Gitter verbunden ist, das als Reflexions-Phasengitter ausgebildet ist,
- wobei ein von der Lichtquelle emittiertes Strahlenbündel am ersten Gitter eine Aufspaltung in zwei Teilstrahlenbündel erfährt,
- die Teilstrahlenbündel anschließend das zweite Gitter beaufschlagen, wo jedes der beiden Teilstrahlenbündel eine Beugung und Richtungsänderung erfährt und wobei die Teilstrahlenbündel nach dem Beaufschlagen des zweiten Gitters orthogonal zueinander polarisiert sind,
- die Teilstrahlenbündel erneut auf das erste Gitter auftreffen und dort wiedervereinigt werden, so dass anschließend ein resultierendes Signalstrahlenbündel in Richtung der Detektionseinheit propagiert.

Alternativ kann auch vorgesehen sein, dass

- ein erstes Objekt mit einem als Maßverkörperung fungierendem ersten Gitter verbunden ist, das als Reflexions-Phasengitter oder als Transmissions-Phasengitter ausgebildet ist,
- ein zweites Objekt mit einer Abtasteinheit verbunden ist, wobei die Abtasteinheit folgende Komponenten umfasst:
- eine Lichtquelle,
- ein als Abtastgitter fungierendes zweites Gitter, das ferner als Polarisationsgitter wirkt und als Reflexions-Phasengitter ausgebildet ist,
- eine Detektionseinheit,
- wobei ein von der Lichtquelle emittiertes Strahlenbündel am ersten Gitter eine Aufspaltung in zwei Teilstrahlenbündel erfährt,
- die Teilstrahlenbündel anschließend das zweite Gitter beaufschlagen, wo jedes der beiden Teilstrahlenbündel eine Richtungsänderung erfährt und wobei die Teilstrahlenbündel nach dem Beaufschlagen des zweiten Gitters orthogonal zueinander polarisiert sind,
- die Teilstrahlenbündel erneut auf das erste Gitter auftreffen und dort wiedervereinigt werden, so dass anschließend ein resultierendes Signalstrahlenbündel in Richtung der Detektionseinheit propagiert.

Über die erfindungsgemäßen Maßnahmen lassen sich nunmehr optische Positionsmesseinrichtungen realisieren, die zur polarisationskodierten Erzeugung phasenverschobener Abtastsignale keine separaten polarisationsoptischen Bauelemente im Abtaststrahlengang erfordern. Die gewünschten polarisationsoptischen Wirkungen auf die signalerzeugenden Teilstrahlenbündel lassen sich mit Hilfe eines Gitters erzeugen, das zusätzlich zu seiner üblichen Funktion im Abtaststrahlengang als Polarisationsgitter fungiert. Ein besonders kompakter Aufbau der entsprechenden Positionsmesseinrichtungen ist damit möglich.

Gegenüber den eingangs diskutierten Varianten zur Erzeugung polarisationskodierter Abtastsignale ohne separate polarisationsoptische Bauelemente unterliegt die erfindungsgemäße Lösung keinen einschränkenden Randbedingungen, wie sie dort z.B. bezüglich des Einfallswinkels eines aufzuspaltenden Strahlenbündels vorliegen. Desweiteren entfällt gegenüber diesen Lösungen die Beeinträchtigung der Signalqualität im Fall eines sich ändernden Abtastabstands. Die Erzeugung definierter Polarisationszustände in den zur Signalgewinnung herangezogenen Teilstrahlenbündeln ist bei der erfindungsgemäßen Lösung grundsätzlich unabhängig vom jeweiligen Abtastabstand.

Auch in optischen Positionsmesseinrichtungen, in denen die aufgespaltenen Teilstrahlenbündel nicht vollständig räumlich getrennt verlaufen, ermöglichen die erfindungsgemäßen Maßnahmen nunmehr die Erzeugung polarisationskodierter Abtastsignale. Auf konventionelle Art und Weise wäre dies nicht möglich, da hier keine polarisationsoptischen Bauelemente im Abtaststrahlengang in den überlappenden Teilstrahlenbündeln angeordnet werden können.

**Fortsetzung: Ursprüngliche** Seite 10

Desweiteren entfällt auch die Beschränkung auf die erforderlichen sehr kleinen Gitterperioden zur Strahlablenkung, wenn gemäß dem Stand der Technik sogenannte Hochfrequenzgitter als Polarisationsgitter genutzt werden.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1        eine schematisierte Darstellung einer optischen Positionsmesseinrichtung gemäß dem Stand der Technik;

Figur 2        den entfalteten Abtaststrahlengang in einem Ausführungsbeispiel der erfindungsgemäßen optischen Positionsmesseinrichtung, ausgebildet als sog. 3-Gitter-Encoder;

Figur 3a, 3b    jeweils eine seitliche Ansicht eines als 3-Gitter-Encoder ausgebildeten Ausführungsbeispiels einer erfindungsgemäßen optischen Positionsmesseinrichtung;

Figur 4        eine schematisierte Darstellung der Detektionseinheit des Ausführungsbeispiels aus den Figuren 3a, 3b;

Figur 5        eine Draufsicht auf das als Maßverkörperung fungierende erste Gitter des Ausführungsbeispiels aus den Figuren 3a, 3b;

Figur 6a       eine Teil-Draufsicht auf das als Polarisationsgitter fungierende zweite Gitter des Ausführungsbeispiels aus den Figuren 3a, 3b;

Figur 6b       eine Detailansicht des Polarisationsgitters aus Figur 6a;

Figur 6c       eine Teil-Schnittansicht des Polarisationsgitters aus Figur 6a;

Figur 7a - 7e  jeweils eine Detailansicht der Einheitszelle alternativer Ausführungsformen von Polarisationsgittern.

## BESCHREIBUNG DER AUSFÜHRUNGSFORMEN

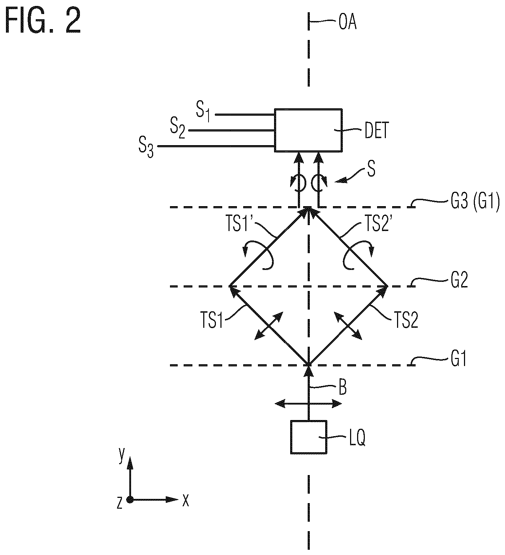

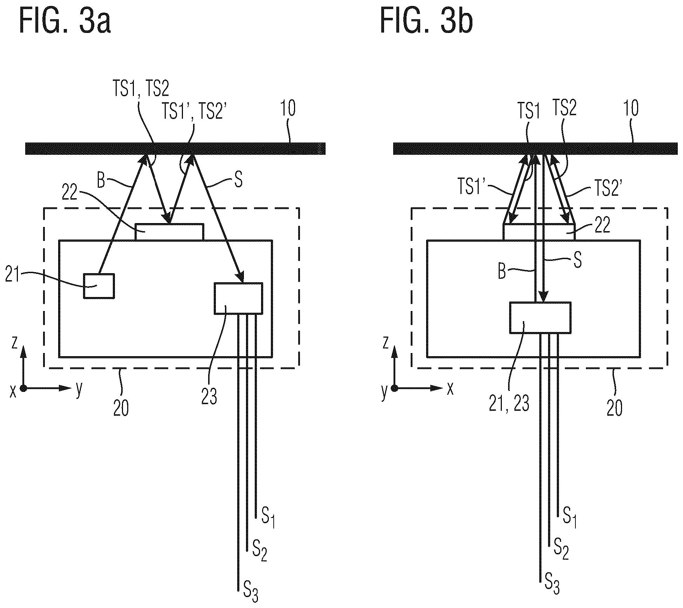

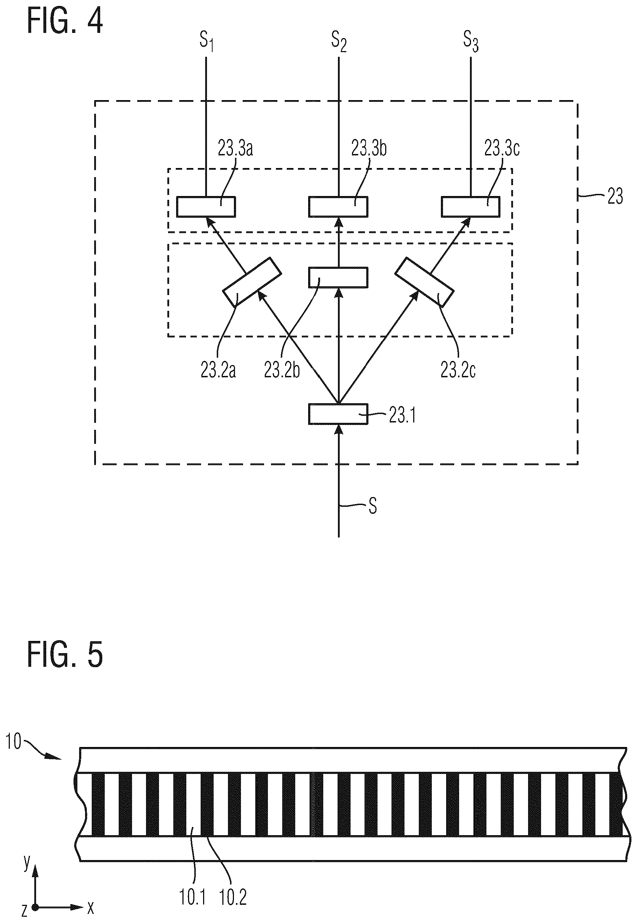

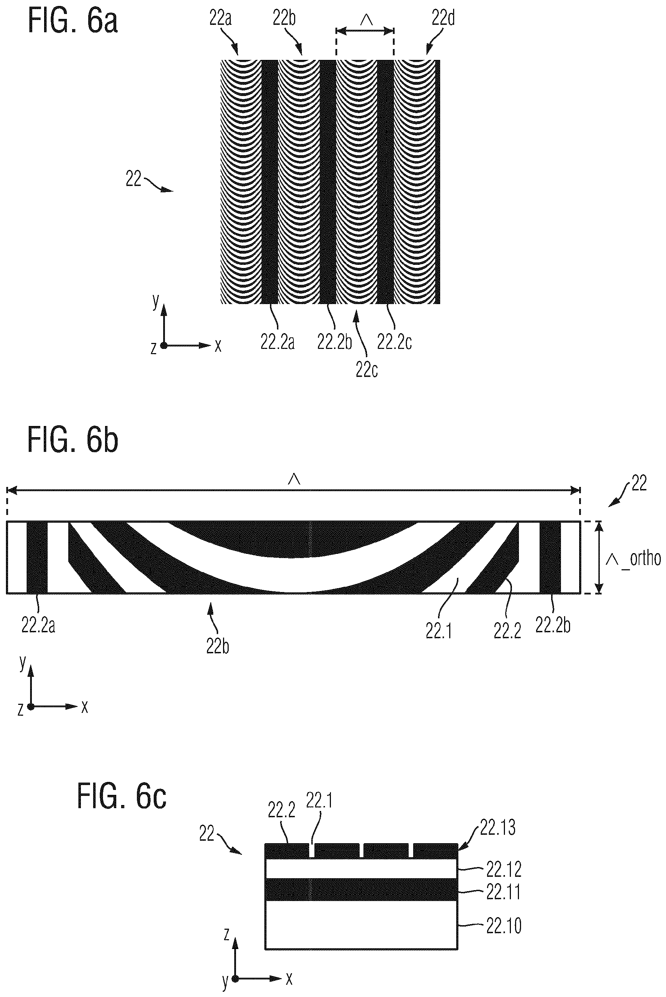

Anhand der Figuren 2 - 6c wird im Folgenden ein Ausführungsbeispiel einer erfindungsgemäßen optischen Positionsmesseinrichtung beschrieben. Diese ist als sogenannter 3-Gitter-Encoder ausgebildet, dessen entfalteter Abtaststrahlengang in Figur 2 veranschaulicht ist. Die Figuren 3a, 3b zeigen verschiedene Schnittansichten eines konkreten Ausführungsbeispiels eines derartigen 3-Gitter-Encoders, Figur 4 eine Detektionseinheit desselbigen, Figur 5 eine Draufsicht auf die verwendete Maßverkörperung und die Figuren 6a - 6c verschiedene Darstellungen des in diesem Beispiel verwendeten Polarisationsgitters.

Die entsprechende Positionsmesseinrichtung dient zur Erfassung der Relativposition zweier entlang mindestens einer Messrichtung x zueinander beweglichen Objekte; letztere sind in den verschiedenen Figuren nicht gezeigt. Bei den zueinander beweglichen Objekten kann es sich zum Beispiel um zueinander entlang einer geradlinigen Messrichtung x verschiebbare Maschinen-Komponenten handeln. Die von der Positionsmesseinrichtung erzeugten Abtastsignale bezüglich der Relativposition der Maschinen-Komponenten werden an eine Steuereinheit übergeben, die diese zur Bewegungssteuerung nutzen kann.

Generell ist dabei ein erstes Objekt mit einem ersten Gitter der Positionsmesseinrichtung verbunden und ein zweites Objekt mit einem zweiten Gitter. An einem der Gitter erfolgt eine Aufspaltung eines von einer Lichtquelle emittierten Beleuchtungsstrahlenbündels in mindestens zwei Teilstrahlenbündel. Im weiteren Verlauf der Abtaststrahlengänge erfahren die Teilstrahlenbündel unterschiedliche polarisationsoptische Wirkungen und werden schließlich an einem Gitter zu einem resultierenden Signalstrahlenbündel wiedervereinigt. Aus dem Signalstrahlenbündel sind anschließend in einer Detektionseinheit mehrere phasenverschobene, verschiebungs- bzw. positionsabhängige Abtastsignale erzeugbar. Zwischen Aufspaltung und Wiedervereinigung der Teilstrahlenbündel sind hierbei keine separaten polarisationsoptischen Bauelemente in den Abtaststrahlengängen angeordnet, es fungiert vielmehr mindestens eines der durchlaufenen Gitter als Polarisationsgitter zur Erzeugung der unterschiedlichen polarisationsoptischen Wirkungen auf die Teilstrahlenbündel. Hierbei ist das Polarisationsgitter derart ausgebildet, dass an jedem Einfallort auf dem Gitter Beugungsordnungen mit unterschiedlichen Polarisationszuständen resultieren. Grundsätzlich ist dabei durch die geeignete Ausbildung des Polarisationsgitters und die Wahl der entsprechenden Gitterparameter möglich, unterschiedlichste Polarisationszustände in den gebeugten Teilstrahlenbündeln einzustellen. Das heißt, die gebeugten Teilstrahlenbündel können linear, elliptisch oder zirkular polarisiert sein. Bei einer Aufspaltung eines Beleuchtungsstrahlenbündels in Teilstrahlenbündel mit unterschiedlichen Polarisationszuständen erweist sich ferner als vorteilhaft, wenn die aufgespaltenen Teilstrahlenbündel im Abtaststrahlengang jeweils orthogonal zueinander polarisiert sind. Im Fall einer linearen Polarisation bedeutet dies, dass die Polarisationsebenen in den aufgespaltenen Teilstrahlenbündeln senkrecht zueinander orientiert sind; bei zirkularer oder elliptischer Polarisation ist unter einer orthogonalen Polarisation zu verstehen, dass die Polarisationsorientierung in den Teilstrahlenbündeln entgegengesetzt zueinander ausgerichtet ist.

Die konkrete Ausgestaltung geeigneter Polarisationsgitter und mögliche Ausführungsformen desselbigen werden im Verlauf der nachfolgenden Beschreibung noch im Detail erläutert.

Im 3-Gitter-Encoder gemäß dem ersten Ausführungsbeispiel, dessen entfalteter Abtaststrahlengang mit den zur Signalerzeugung genutzten Strahlenbündeln in Figur 2 gezeigt ist, gelangt das von der Lichtquelle LQ ausgesandte Beleuchtungsstrahlenbündel B auf ein erstes Gitter G1 und wird über dieses in die zwei Teilstrahlenbündel TS1, TS2 aufgespalten, die jeweils von der optischen Achse OA weg propagieren. Das Beleuchtungsstrahlenbündel B ist hierbei wie über den Doppelpfeil angedeutet linear polarisiert; die beiden über das erste Gitter G1 aufgespaltenen Teilstrahlenbündel TS1, TS2 weisen zunächst jeweils die gleiche Polarisation auf. Im weiteren Verlauf des Abtaststrahlengangs treffen die beiden Teilstrahlenbündel TS1, TS2 dann auf ein zweites Gitter G2, welches in diesem Beispiel als Polarisationsgitter fungiert. Über das zweite Gitter G2 werden die Teilstrahlenbündel TS1, TS2 gebeugt und erfahren dabei eine Richtungsänderung, so dass sie anschließend als Teilstrahlenbündel TS1', TS2' jeweils in Richtung der optischen Achse OA weiterpropagieren. Neben der Richtungsänderung bewirkt das als Polarisationsgitter dienende zweite Gitter G2, dass die gebeugten Teilstrahlenbündel TS1', TS2' nach dem Durchlaufen oder Beaufschlagen des Gitters G2 unterschiedliche Polarisationszustände besitzen und orthogonal zueinander polarisiert sind; grundsätzlich können hierbei wie oben bereits erwähnt die Teilstrahlenbündel TS1', TS2' orthogonal linear, orthogonal elliptisch oder orthogonal zirkular zueinander polarisiert sein. Im dargestellten Beispiel ist eine orthogonale zirkulare Polarisation der beiden Teilstrahlenbündel TS1', TS2' vorgesehen. Am dritten Gitter G3 gelangen die Teilstrahlenbündel TS1', TS2' dann schließlich zur Wiedervereinigung und ein Signalstrahlenbündel S mit überlagerten Teilstrahlenbündeln TS1', TS2' unterschiedlicher Polarisation propagiert weiter in Richtung einer Detektionseinheit DET, über die die Mehrzahl phasenverschobener Abtastsignale $S_1$, $S_2$, $S_3$ aus dem Signalstrahlenbündel S erzeugt wird. Eine mögliche Ausführungsform einer geeigneten Detektionseinheit DET wird im Verlauf der nachfolgenden Beschreibung noch im Detail erläutert.

Die Figuren 3a, 3b zeigen jeweils eine konkrete Ausführungsform eines derartigen 3-Gitter-Gebers, ausgebildet als Auflicht-System, in verschiedenen Schnittansichten. Wie aus diesen Darstellungen ersichtlich, fungiert das erste vom Beleuchtungsstrahlenbündel B beaufschlagte Gitter im Abtaststrahlengang als Maßverkörperung 10. Diese ist hier als Reflexions-Phasengitter mit entlang der Messrichtung x periodisch angeordneten Teilungsbereichen 10.1, 10.2 ausgebildet, die unterschiedliche phasenschiebenden Wirkungen aufweisen; eine Draufsicht auf die Maßverkörperung 10 ist in Figur 5 gezeigt. Die Maßverkörperung 10 ist mit einem ersten - nicht gezeigten - Objekt verbunden. Über das erste Gitter bzw. die Maßverkörperung 10 erfolgt wie aus den Figuren 3a, 3b ersichtlich eine Aufspaltung des Beleuchtungsstrahlenbündels B in zwei Teilstrahlenbündel TS1, TS2. Aus Gründen der besseren Übersichtlichkeit sind in den Figuren weitere Beugungsordnungen nicht gezeigt, die bei der Beugung und Aufspaltung des Beleuchtungsstrahlenbündels B am ersten Gitter resultieren, welche aber für die Signalerzeugung nicht genutzt werden.

Sämtliche weiteren Komponenten der erfindungsgemäßen Positionsmesseinrichtung sind im vorliegenden Ausführungsbeispiel in einer Abtasteinheit 20 angeordnet, die mit dem - ebenfalls nicht gezeigten - zweiten Objekt verbunden ist. Entlang der angegebenen Messrichtung x sind die beiden Objekte und damit die Maßverkörperung 10 und die Abtasteinheit 20 linear verschiebbar zueinander angeordnet.

Die Abtasteinheit 20 umfasst neben der Lichtquelle 21 und der Detektionseinheit 23 das zweite im Abtaststrahlengang beaufschlagte Gitter, welches in diesem Ausführungsbeispiel auch als Abtastgitter 22 bezeichnet wird und hier als Reflexions-Phasengitter ausgebildet ist. Das Abtastgitter 22 fungiert in der dargestellten optischen Positionsmesseinrichtung als Polarisationsgitter und bewirkt neben der Beugung der darauf einfallenden, linear polarisierten Teilstrahlenbündel TS1, TS2 und der dabei erfolgenden Richtungsänderung, dass die gebeugten Teilstrahlenbündel TS1', TS2' nach dem Beaufschlagen des Abtastgitters 22 orthogonal zueinander polarisiert sind. Im dargestellten Beispiel ist hierbei in der xz-Ebene gemäß in Figur 3b eine Beugung und Rückreflexion der Teilstrahlenbündel TS1', TS2' in die Einfallsrichtung vorgesehen. Das heißt, die von der Maßverkörperung 10 her einfallenden Teilstrahlenbündel TS1, TS2 treffen in der xz-Ebene unter dem sogenannten Littrow-Winkel auf das Abtastgitter 22 und werden damit in der xz-Ebene als Teilstrahlenbündel TS1', TS2' unter dem gleichen Winkel wieder zur Maßverkörperung 10 zurückreflektiert. Als drittes Gitter im Abtaststrahlengang dient damit in diesem Ausführungsbeispiel die zum zweiten Mal beaufschlagte Maßverkörperung 10. An der Maßverkörperung 10 werden die vom Abtastgitter 22 her einfallenden Teilstrahlenbündel TS1', TS2' wiedervereinigt, so dass anschließend ein Signalstrahlenbündel S in Richtung der Detektionseinheit 23 propagiert. Über die Detektionseinheit 23 wird das Signalstrahlenbündel S in drei, um jeweils 120° gegeneinander phasenverschobene, positionsabhängige Abtastsignale $S_1$, $S_2$, $S_3$ umgewandelt, die dann z.B. einer nachgeordneten - nicht in den Figuren gezeigten - Steuereinheit zur Weiterverarbeitung übergeben werden. Alternativ hierzu wäre es selbstverständlich auch möglich, vier um jeweils 90° gegeneinander phasenverschobene, positionsabhängige Abtastsignale zu erzeugen.

Eine mögliche Ausführungsform einer geeigneten Detektionseinheit 23 ist in Figur 4 in schematischer Form dargestellt. Wie daraus ersichtlich, gelangt das vom dritten durchlaufenen Gitter im Abtaststrahlengang bzw. der Maßverkörperung her einfallende Signalstrahlenbündel S mit den überlagerten Teilstrahlenbündeln TS1', TS2' in der Detektionseinheit 23 zunächst auf ein Aufspaltgitter 23.1, das das Signalstrahlenbündel S in drei identische Teilstrahlenbündel aufspaltet. Die aufgespaltenen Teilstrahlenbündel durchlaufen dann drei Polarisatoren 23.2a, 23.2b, 23.2c, deren Polarisationsrichtungen jeweils um 60° zueinander verdreht sind. Mit Hilfe der den Polarisatoren 23.2a, 23.2b, 23.2c nachgeordneten optoelektronischen Detektoren 23.3a, 23.3b, 23.3c können anschließend die drei Teilstrahlenbündel in drei um jeweils 120° phasenverschobene, verschiebungsabhängige Abtastsignale $S_1$, $S_2$, $S_3$ umgewandelt und zur Weiterverarbeitung bereitgestellt werden.

Anhand der Figuren 6a - 6c wird nachfolgend ein Ausführungsbeispiel eines Polarisationsgitters im Detail erläutert, wie es etwa in der optischen Positionsmesseinrichtung gemäß den Figuren 2 - 5 als zweites beaufschlagtes Gitter bzw. Abtastgitter 22 im Abtaststrahlengang eingesetzt werden kann. In der anschließenden Beschreibung wird für das Polarisationsgitter dabei das gleiche Bezugszeichen 22 verwendet, welches in der bisherigen Beschreibung für das Abtastgitter verwendet wurde.

Wie bereits oben ausgeführt, dient das Polarisationsgitter 22 in der erfindungsgemäßen optischen Positionsmesseinrichtung dazu, an jedem Einfallsort auf dem Gitter definierte polarisationsoptische Wirkungen auf die aufgespaltenen Teilstrahlenbündel auszuüben, so dass Beugungsordnungen mit unterschiedlichen Polarisationszuständen resultieren. Damit kann vermieden werden, separate polarisationsoptische Bauelemente zusätzlich im Abtaststrahlengang vorzusehen. Ferner lässt sich mit Hilfe derartiger Polarisationsgitter auch bei 3-Gitter-Encodern gemäß Figur 2 nunmehr eine polarisationsoptische Erzeugung von phasenverschobenen Abtastsignalen realisieren. Aufgrund der bei solchen Systemen üblicherweise kleinen Abstände zwischen den Gittern liegt im Bereich des zweiten beaufschlagten Gitters üblicherweise keine räumliche Trennung der aufgespaltenen Teilstrahlenbündel vor, d.h. diese überlappen sich im Bereich des zweiten Gitters. Es wäre aufgrund dieser Strahl-Überlappung somit nicht möglich, auf konventionelle Art und Weise, d.h. mittels polarisationsoptischer Bauelemente in den Teilstrahlenbündeln, eine polarisationsoptische Erzeugung von phasenverschobenen Abtastsignalen umzusetzen.

Das entsprechende Polarisationsgitter 22 ist in der erfindungsgemäßen optischen Positionsmesseinrichtung derart ausgebildet, dass an jedem Einfallsort auf dem Gitter Beugungsordnungen mit unterschiedlichen Polarisationszuständen resultieren. Vorzugsweise erfolgt die Auslegung des Polarisationsgitters 22 dabei so, dass die resultierenden +/- 1. Beugungsordnungen orthogonal zueinander polarisiert sind.

Wie aus der Teil-Draufsicht auf ein Ausführungsbeispiel eines geeigneten Polarisationsgitters 22 in Figur 6a und insbesondere aus der Detailansicht der Einheitszelle eines derartigen Polarisationsgitters in Figur 6b ersichtlich ist, umfasst das Polarisationsgitter 22 eine Mehrzahl von bogenförmig gekrümmten Gitterstrukturen in Form von Gitterlücken 22.1 und Gitterstegen 22.2.

Im vorliegenden Ausführungsbeispiel ist das Polarisationsgitter 22 als Reflexions-Phasengitter ausgebildet. Dies bedeutet, dass die alternierend angeordneten Gitterstrukturen bzw. Gitterlücken 22.1 und Gitterstege 22.2 unterschiedliche Reflexionseigenschaften aufweisen, insbesondere unterschiedliche phasenschiebende Wirkungen auf die einfallenden Teilstrahlenbündel ausüben.

Die Längserstreckungsrichtung der Gitterstrukturen respektive Gitterlücken 22.1 und Gitterstege 22.2 ist wie aus den Figuren 6a, 6b ersichtlich jeweils parallel zur Messrichtung x orientiert. Sowohl entlang der Messrichtung x als auch senkrecht zur Messrichtung x sind die Gitterstrukturen ferner periodisch angeordnet. Entlang bzw. parallel zur Messrichtung x ist dabei eine Mehrzahl von periodisch mit einer Messrichtungs-Periodizität $\Lambda$ angeordneten Gitterabschnitten 22a, 22b, 22c, 22d vorgesehen; deren Längserstreckungsrichtung ist senkrecht zur Messrichtung x, also in der angegebenen y-Richtung, orientiert. Innerhalb der jeweiligen Gitterabschnitte 22a, 22b, 22c, 22d sind die bogenförmigen Gitterstrukturen periodisch mit einer Orthogonal-Periodizität $\Lambda\_ortho$ angeordnet. Besonders vorteilhaft erweist sich, wenn die Orthogonal-Periodizität $\Lambda\_ortho$ im Polarisationsgitter 22 gemäß der nachfolgenden Beziehung 1) gewählt wird:

$$\Lambda\_ortho < 1.5 \cdot \lambda \qquad \text{(Gl. 1)}$$

mit:

$\Lambda\_ortho :=$ Orthogonal-Periodizität der Gitterstrukturen im Polarisationsgitter
$\lambda :=$ Wellenlänge der verwendeten Lichtquelle

Durch die Einhaltung der Beziehung 1) kann sichergestellt werden, dass das entsprechende Polarisationsgitter 22 nur eine schwache Beugungswirkung auf die darauf einfallenden Teilstrahlenbündel in orthogonaler Richtung gegenüber der Hauptbeugungsrichtung aufweist. Die Hauptbeugungsrichtung liegt hierbei in der xz-Ebene, die hierzu orthogonale Beugungsrichtung in der yz-Ebene. Die Beugung in der xz-Ebene ist in diesem Ausführungsbeispiel maßgeblich für die Erzeugung der verschiebungsabhängigen Abtastsignale; eine starke Beugungswirkung entlang anderer Ebenen hätte andernfalls eine Reduzierung der Signalintensität und der Polarisationswirkung zur Folge.

Die gekrümmten Gitterstrukturen bzw. Gitterlücken 22.1 und Gitterstege 22.2 des Polarisationsgitters 22 lassen sich im Fall eines vorgegebenen Koordinatensystems gemäß den Figuren 6a, 6b beispielsweise analytisch durch eine der folgenden Beziehungen 2a), 2b) beschreiben:

$$Y = (\Lambda / \pi) \cdot \ln (|1 / \cos(x \cdot \pi / \Lambda)|) \qquad \text{(Gl. 2a)}$$

mit:

$\Lambda :=$ Messrichtungs-Periodizität der Gitterabschnitte
$x :=$ Messrichtung
$Y :=$ Längserstreckungsrichtung der Gitterabschnitte

$$Y = \text{sqrt} ((\Lambda / 2)^2 - x^2) \qquad \text{(Gl. 2b)}$$

mit:

$\Lambda :=$ Messrichtungs-Periodizität der Gitterabschnitte
$x :=$ Messrichtung
$Y :=$ Längserstreckungsrichtung der Gitterabschnitte

Hierbei charakterisiert die Beziehung 2a) eine kettenlinien-förmige Gitterstruktur, die Beziehung 2b) eine kreislinien-förmige Gitterstruktur

Wie insbesondere aus Figur 6a ersichtlich, sind im dargestellten Ausführungsbeispiel zwischen benachbarten Gitterabschnitten 22a, 22b, 22c, 22d in x-Richtung jeweils geradlinige Gitterstege 22.2a, 22.2b, 22.2c angeordnet. Die geradlinigen Gitterstege 22.2a, 22.2b, 22.2c besitzen dabei eine längliche Rechteckform, wobei sich die Rechteck-Längsachse senkrecht zur Messrichtung x, d.h. entlang der Richtung y erstreckt.

Alternativ hierzu kann auch vorgesehen sein, dass zwischen benachbarten Gitterabschnitten 22a, 22b, 22c, 22d Gitterlücken oder aber alternierend benachbart mehrere Gitterstege und Gitterlücken angeordnet sind. Ferner ist es auch möglich, dass in diesen Bereichen weder separate Gitterlücken noch Gitterstege angeordnet sind, sondern stattdessen die Gitterstrukturen benachbarter Gitterabschnitte 22a, 22b, 22c, 22d aneinander grenzen.

Als vorteilhaft erweist sich weiterhin, wenn das Flächenfüllverhältnis FV des Polarisationsgitters 22 gemäß der nachfolgenden Beziehung 3) gewählt wird:

$$FV < 0.6 \qquad (Gl. 3)$$

mit:

FV := Verhältnis der Fläche der Gitterstege in einer Polarisationsgitter-Einheitszelle zur Gesamtfläche der Polarisationsgitter-Einheitszelle

Derartig dimensionierte Polarisationsgitter können einfacher gereinigt werden. Außerdem wird dadurch sichergestellt, dass die verschiedenen Gitterstrukturen hinreichend voneinander separiert sind; dadurch können unerwünschte Kopplungseffekte zwischen benachbarten Gitterstrukturen vermieden werden, die ansonsten zu einer Abschwächung der Intensitäten in den +/- 1. Beugungsordnungen führen würden.

Im Zusammenhang mit dem konkreten Gitter-Aufbau des Polarisationsgitters 22 und geeigneten Materialien für derartige Gitter sei auf die Darstellung der Figur 6c verwiesen, die eine Teil-Schnittansicht des Polarisationsgitters 22 aus den Figuren 6a, 6b in der xz-Ebene zeigt. Wie bereits oben erwähnt, ist dieses Ausführungsbeispiel eines Polarisationsgitters 22 als Reflexions-Phasengitter ausgebildet. Es umfasst ein Trägersubstrat 22.10, auf dem flächig eine Reflektorschicht 22.11 angeordnet ist. Oberhalb der Reflektorschicht 22.11 ist in diesem Beispiel ferner eine flächige Phasenschiebeschicht 22.12 vorgesehen, auf der dann die Gitterstrukturschicht 22.13 angeordnet ist, in der die Gitterstrukturen mit den entsprechenden Gitterstegen 22.2 und Gitterlücken 22.1 in der oben bereits erläuterten Geometrie bzw. in der beschriebenen Anordnung ausgebildet sind.

Als vorteilhaft erweist sich bei einem derartigen Aufbau des Polarisationsgitters 22, wenn die Gitterstrukturschicht 22.13 eine Schichtdicke d aufweist, die gemäß der nachfolgenden Beziehung 4) gewählt ist:

$$d < 0.6 \cdot \lambda \qquad (Gl. 4)$$

mit:

d := Schichtdicke der Gitterstrukturschicht
$\lambda$ := Wellenlänge der verwendeten Lichtquelle

Als Trägersubstrat 22.10 kommt für das Polarisationsgitter 22 in diesem Ausführungsbeispiel etwa Quarzglas oder Zerodur in Betracht.

Die Reflektorschicht 22.11 kann als metallische Reflektorschicht oder als reflektierender Schichtstapel ausgebildet sein, der aus mehreren Schichten mit hoch- und niedrigbrechenden Materialien besteht, z.B. aus $TaO_x$, $TiO_2$, Si als hochbrechenden Materialien und beispielsweise $SiO_2$ als niedrigbrechendem Material. Als Material für die Phasenschiebeschicht 22.12 kommt z.B. $SiO_2$ in Betracht.

Im Hinblick auf die Ausbildung der Gitterstrukturschicht 22.12 kann vorgesehen sein, dass hierfür eine dielektrisches Material aus der Gruppe $SiO_2$, $TaO_x$, $TiO_2$, Si verwendet wird; es ist aber auch möglich, hierfür ein Halbleiter-Material wie TiN oder GaN oder aber Metalle mit hoher Leitfähigkeit wie z.B. Al, Ag, Au einzusetzen. Alternativ kann die Gitterstrukturschicht 22.13 auch aus einem Schichtstapel bestehen, in dem ein oder mehrere der vorgenannten dielektrischen Materialien oder Halbleiter-Materialien verwendet werden.

In einer weiteren alternativen Ausführungsform kann das als Reflexions-Phasengitter ausgebildete Polarisationsgitter lediglich ein Trägersubstrat mit einer darauf angeordneten Reflektorschicht umfassen, wobei darüber eine strukturierte Phasenschiebeschicht angeordnet ist. In diesem Fall würden demzufolge die im Beispiel der Figur 6c vorgesehenen separaten Phasenschiebe- und Gitterstrukturschichten in einer einzigen Schicht gemeinsam ausgebildet, nämlich in Form einer oder mehrerer strukturierter Schichten, die ohne zusätzliche Phasenschiebeschicht direkt auf der Reflektorschicht aufgebracht sind.

Zur Einstellung der gewünschten Polarisationswirkung des entsprechenden Polarisationsgitter sind neben der konkreten Geometrie und Anordnung der Gitterstrukturen, der Gitterparameter Strukturbreite und Ätztiefe natürlich auch die verwendeten Materialien geeignet angepasst zu wählen.

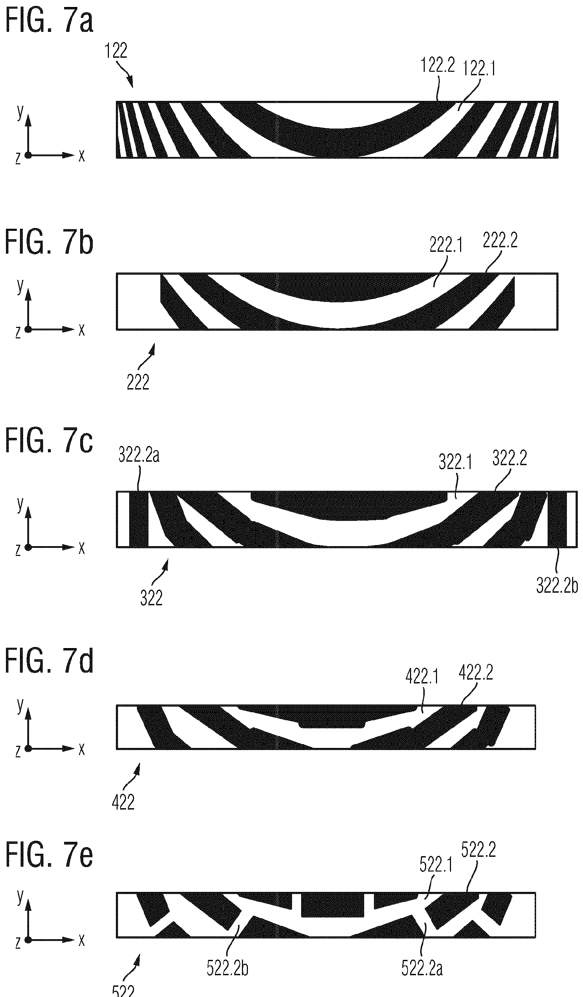

In den Figuren 7a - 7e sind jeweils Ansichten von Einheitszellen alternativer Ausführungsformen von Polarisationsgittern gezeigt, die in der erfindungsgemäßen optischen Positionsmesseinrichtung verwendet werden können.

Bei der in Figur 7a dargestellten Variante eines Polarisationsgitters 122 sind die Gitterstrukturen in Form der Gitterlücken 122.1 und Gitterstege 122.2 kettenlinien-förmig ausgebildet und verlaufen in x-Richtung jeweils bis an den Rand der Einheitszelle. Diese Gitterstrukturen können etwa analytisch durch die obige Beziehung 2a) charakterisiert werden.

In Figur 7b ist eine Einheitszelle eines weiteren Polarisationsgitters 222 gezeigt, bei dem die bogenförmigen Gitterstrukturen bzw. Gitterlücken 222.1 und Gitterstege 222.2 kreislinien-förmig ausgebildet und in x-Richtung an den Rändern der Einheitszelle jeweils abgeschnitten sind.

Bei der in Figur 7c gezeigten Einheitszelle eines Polarisationsgitters 322 werden die kettenlinien-förmigen Gitterstrukturen bzw. Gitterlücken 322.1 und Gitterstege 322.2 aus diskreten linearen Abschnitten zusammengesetzt ausgebildet.

Eine etwas abgewandelte Variante der Einheitszelle eines Polarisationsgitters 422 des Ausführungsbeispiels aus Figur 7c ist schließlich in Figur 7d veranschaulicht. Bei diesem Polarisationsgitter 422 weisen die benachbarten, linearen Abschnitte der Gitterstrukturen bzw. Gitterlücken 422.1 und Gitterstege 422.2 noch zusätzlich einen Versatz auf.

In Figur 7e ist schließlich eine weitere Variante einer Einheitszelle eines Polarisationsgitters 522 gezeigt. In diesem Beispiel sind die bogenförmigen Gitterstrukturen in Form von Gitterlücken und 522.1 und Gitterstegen 522 teilweise unterbrochen. So weist z.B. der zentrale Gittersteg 522.2 in der Einheitszelle zwei Unterbrechungen 522.2a, 522.2b auf.

Die Varianten in den Figuren 7b - 7e erweisen sich als besonders vorteilhaft aufgrund ihrer einfacheren Herstellbarkeit; Gitterbereiche mit extrem feiner Strukturierung können bei diesen Ausführungsformen vermieden werden.

Neben den konkret beschriebenen Ausführungsbeispielen existieren im Rahmen der vorliegenden Erfindung selbstverständlich noch weitere Ausgestaltungsmöglichkeiten.

So ist es auch möglich, die erfindungsgemäße optische Positionsmesseinrichtung zur Erfassung rotatorischer Relativbewegungen zweier Objekte auszubilden.

Desweiteren ist es im Fall einer Ausbildung als 3-Gitter-Encoder keinesfalls zwingend, dass das erste Gitter in Form der Maßverkörperung und das zweite Gitter in Form des Abtastgitters bzw. Polarisationsgitters jeweils reflektiv ausgeführt werden. So kann natürlich das erste Gitter auch als Transmissions-Phasengitter und das zweite Gitter ebenfalls als Transmissions-Phasengitter ausgebildet sein; ebenso sind gemischte Aufbauvarianten mit Reflexions- und Transmissions-Phasengittern möglich, also etwa einem transmittiven Abtast- bzw. Polarisationsgitter und einer reflektiven Maßverkörperung oder einer transmittiven Maßverkörperung und einem reflektiven Polarisationsgitter etc..

Wird dabei das Polarisationsgitter transmittiv als Transmissions-Phasengitter ausgeführt, dann kann dieses z.B. ein transparentes Trägersubstrat umfassen, in das die Gitterstrukturen geätzt werden. Alternativ ist es auch möglich, auf das transparente Trägersubstrat eine separate Gitterstrukturschicht aus dielektrischem Material oder Halbleitermaterial aufzubringen, in der die jeweiligen Gitterstrukturen ausgebildet werden. Hierbei kann die Gitterstrukturschicht auch wiederum aus einem geeigneten Schichtstapel ausgebildet sein.

Ferner ist es natürlich möglich, neben der erläuterten Abtastung gemäß einem 3-Gitter-Abtastprinzip auch andere Abtaststrahlengänge in der erfindungsgemäßen optischen Positionsmesseinrichtung vorzusehen. Beispielsweise kann in sogenannten Streifen-Encodern, wie sie z.B. aus der WO 2008/138501 A1 oder der EP 2450672 A2 bekannt sind, eines der Gitter als Polarisationsgitter ausgebildet werden, um damit die polarisationsoptische Erzeugung phasenverschobener Abtastsignale zu ermöglichen; eine Anordnung zusätzlicher bzw. separater polarisationsoptischer Bauelemente ist dann nicht mehr erforderlich. In derartigen Systemen kann das erste Gitter als Reflexions-Phasengitter oder als Transmissions-Phasengitter ausgebildet sein und das zweite Gitter als Reflexions-Phasengitter; das zweite Gitter fungiert als Polarisationsgitter.

Sowohl bei diesem Abtastprinzip als auch bei anderen optischen Abtastprinzipien kann aber alternativ hierzu grundsätzlich jedes der beaufschlagten Gitter als Polarisationsgitter ausgebildet sein.

**Patentansprüche**

1. Optische Positionsmesseinrichtung zur Erfassung der Relativposition zweier zueinander entlang mindestens einer Messrichtung (x) beweglichen Objekte, die mit einem ersten Gitter und einem zweiten Gitter verbunden sind, wobei an einem Gitter eine Aufspaltung eines von einer Lichtquelle emittierten Beleuchtungsstrahlenbündels in mindestens zwei Teilstrahlenbündel erfolgt, die Teilstrahlenbündel unterschiedliche polarisationsoptische Wirkungen erfahren und nach einer Wiedervereinigung der unterschiedlich polarisierten Teilstrahlenbündel an einem Gitter aus dem resultierenden Signalstrahlenbündel in einer Detektionseinheit mehrere phasenverschobene, verschiebungsabhängige Abtastsignale erzeugbar sind, wobei in den Abtaststrahlengängen der Teilstrahlenbündel zwischen Aufspaltung und Wiedervereinigung keine separaten polarisationsoptischen Bauelemente angeordnet sind und mindestens eines der durchlaufenen Gitter als Polarisationsgitter zur Erzeugung der unterschiedlichen polarisationsoptischen Wirkungen auf die Teilstrahlenbündel ausgebildet ist,
**dadurch gekennzeichnet,**

   - **dass** das Polarisationsgitter (22; 122; 222; 322; 422; 522) derart ausgebildet ist, dass ortsunabhängig auf dem Polarisationsgitter (22; 122; 222; 322; 422; 522) Beugungsordnungen mit unterschiedlichen Polarisationszuständen resultieren, und
- **dass** das Polarisationsgitter (22; 122; 222; 322; 422; 522) sowohl entlang der Messrichtung (x) als auch orthogonal zur Messrichtung (x) periodisch angeordnete Gitterstrukturen aufweist und wobei die Orthogonal-Periodizität ($\Lambda\_ortho$) gemäß

$$\Lambda\_ortho < 1.5 \cdot \lambda$$

gewählt ist, mit

$\Lambda\_ortho$ := Orthogonal-Periodizität der Gitterstrukturen
$\Lambda$ := Wellenlänge der verwendeten Lichtquelle.

2. Optische Positionsmesseinrichtung nach Anspruch 1, **dadurch gekennzeichnet, dass** das Polarisationsgitter (22; 122; 222; 322; 422; 522) eine Mehrzahl von bogenförmig gekrümmten Gitterstrukturen in Form von Gitterstegen (22.2; 122.2; 222.2; 322.2; 422.2; 522.2) und Gitterlücken (22.1; 122.1; 222.1; 322.1; 422.1; 522.1) umfasst, deren Längserstreckungsrichtung jeweils parallel zur Messrichtung (x) orientiert ist.

3. Optische Positionsmesseinrichtung nach Anspruch 2, **dadurch gekennzeichnet, dass** das Polarisationsgitter (22; 122; 222; 322; 422; 522) parallel zur Messrichtung (x) periodisch mit einer Messrichtungs-Periodizität ($\Lambda$) angeordnete, streifenförmige Gitterabschnitte (22a, 22b, 22c, 22d) aufweist, deren Längserstreckungsrichtung senkrecht zur Messrichtung (x) orientiert ist, wobei in den Gitterabschnitten (22a, 22b, 22c, 22d) die Gitterstrukturen senkrecht zur Messrichtung (x) periodisch mit der Orthogonal-Periodizität ($\Lambda\_ortho$) angeordnet sind.

4. Optische Positionsmesseinrichtung nach Anspruch 2 oder 3, **dadurch gekennzeichnet, dass** zwischen benachbarten Gitterabschnitten (22a, 22b, 22c, 22d) des Polarisationsgitters (22; 122; 222; 322; 422; 522)

- eine Gitterlücke angeordnet ist, oder
- ein Gittersteg angeordnet ist, oder
- alternierend benachbart mehrere Gitterlücken und Gitterstege angeordnet sind.

5. Optische Positionsmesseinrichtung nach Anspruch 2 oder 3, **dadurch gekennzeichnet, dass** Gitterstrukturen benachbarter Gitterabschnitte aneinander grenzen.

6. Optische Positionsmesseinrichtung nach mindestens einem der vorangehenden Ansprüche, **dadurch gekennzeichnet, dass** das Flächenfüllverhältnis FV des Polarisationsgitters (22; 122; 222; 322; 422; 522) gemäß der Beziehung FV < 0.6 gewählt ist, wobei das Flächenfüllverhältnis FV als Verhältnis der Fläche der Gitterstege (22.2; 122.2; 222.2; 322.2; 422.2; 522.2) in einer Polarisationsgitter-Einheitszelle zur Gesamtfläche der Polarisationsgitter-Einheitszelle definiert ist.

7. Optische Positionsmesseinrichtung nach mindestens einem der vorangehenden Ansprüche, **dadurch gekennzeichnet, dass** das Polarisationsgitter (22; 122; 222; 322; 422; 522) als Reflexions-Phasengitter ausgebildet ist, dessen Gitterstege (22.2; 122.2; 222.2; 322.2; 422.2; 522.2) und Gitterlücken (22.1; 122.1; 222.1; 322.1; 422.1; 522.1) unterschiedliche Reflexionseigenschaften aufweisen.

8. Optische Positionsmesseinrichtung nach Anspruch 7, **dadurch gekennzeichnet, dass** das Reflexions-Phasengitter mindestens die nachfolgenden Komponenten umfasst:

- ein Trägersubstrat (22.10),
- eine auf dem auf dem Trägersubstrat (22.10) angeordnete flächige Reflektorschicht (22.11),
- eine oberhalb der Reflektorschicht (22.11) angeordnete Gitterstrukturschicht (22.13).

9. Optische Positionsmesseinrichtung nach Anspruch 8, **dadurch gekennzeichnet, dass** die Gitterstrukturschicht (22.13) eine Schichtdicke d aufweist, die gemäß der Beziehung d < 0.6 $\cdot$ $\lambda$ gewählt ist, wobei $\lambda$ die Wellenlänge der verwendeten Lichtquelle (LQ; 21) angibt.

**10.** Optische Positionsmesseinrichtung nach Anspruch 8, **dadurch gekennzeichnet, dass** zwischen der flächigen Reflektorschicht (22.11) und der Gitterstrukturschicht (22.12) eine flächige Phasenschiebeschicht (22.12) angeordnet ist.

**11.** Optische Positionsmesseinrichtung nach Anspruch 8, **dadurch gekennzeichnet,**

- **dass** die Reflektorschicht (22.11) aus einer metallischen Reflektorschicht oder aus einem reflektierenden Schichtstapel besteht und
- **dass** die Gitterstrukturschicht (22.13) aus einem dielektrischen Material der Gruppe $SiO_2$, $TaO_x$, $TiO_2$, Si oder aus einem Halbleiter-Material der Gruppe TiN, GaN oder aus einem Schichtstapel mit einem oder mehreren der vorgenannten dielektrischen Materialien und einem oder mehreren der vorgenannten Halbleiter-Materialien besteht.

**12.** Optische Positionsmesseinrichtung nach mindestens einem der vorhergehenden Ansprüche, **dadurch gekennzeichnet, dass** das Polarisationsgitter (22; 122; 222; 322; 422; 522.1) derart ausgebildet ist, dass resultierende +/-1. Beugungsordnungen orthogonal zueinander polarisiert sind.

**13.** Optische Positionsmesseinrichtung nach mindestens einem der vorhergehenden Ansprüche, **dadurch gekennzeichnet, dass**

- ein erstes Objekt mit einem ersten Gitter verbunden ist, das als Reflexions-Phasengitter oder Transmissions-Phasengitter ausgebildet ist,
- ein zweites Objekt mit einem als Polarisationsgitter (22; 122; 222; 322; 422; 522) fungierenden zweiten Gitter verbunden ist, das als Reflexions-Phasengitter ausgebildet ist,
- wobei ein von der Lichtquelle (21) emittiertes Strahlenbündel (B) am ersten Gitter eine Aufspaltung in zwei Teilstrahlenbündel (TS1, TS2) erfährt,
- die Teilstrahlenbündel (TS1, TS2) anschließend das zweite Gitter beaufschlagen, wo jedes der beiden Teilstrahlenbündel (TS1, TS2) eine Beugung und Richtungsänderung erfährt und wobei die Teilstrahlenbündel (TS1', TS2') nach dem Beaufschlagen des zweiten Gitters orthogonal zueinander polarisiert sind,
- die Teilstrahlenbündel (TS1', TS2') erneut auf das erste Gitter (10) auftreffen und dort wiedervereinigt werden, so dass anschließend ein resultierendes Signalstrahlenbündel (S) in Richtung der Detektionseinheit (23) propagiert.

**14.** Optische Positionsmesseinrichtung nach mindestens einem der Ansprüche 1 - 12, **dadurch gekennzeichnet, dass**

- ein erstes Objekt mit einem als Maßverkörperung (10) fungierendem ersten Gitter (G1) verbunden ist, das als Reflexions-Phasengitter oder als Transmissions-Phasengitter ausgebildet ist,
- ein zweites Objekt mit einer Abtasteinheit (20) verbunden ist, wobei die Abtasteinheit (20) folgende Komponenten umfasst:

  - eine Lichtquelle (LQ; 21),
  - ein als Abtastgitter fungierendes zweites Gitter (G2), das ferner als Polarisationsgitter (22; 122; 222; 322; 422; 522) wirkt und als Reflexions-Phasengitter ausgebildet ist,
  - eine Detektionseinheit (DET; 23),

- wobei ein von der Lichtquelle (LQ; 21) emittiertes Strahlenbündel (B) am ersten Gitter (G1) eine Aufspaltung in zwei Teilstrahlenbündel (TS1, TS2) erfährt,
- die Teilstrahlenbündel (TS1, TS2) anschließend das zweite Gitter (G2) beaufschlagen, wo jedes der beiden Teilstrahlenbündel (TS1, TS2) eine Richtungsänderung erfährt und wobei die Teilstrahlenbündel (TS1', TS2') nach dem Beaufschlagen des zweiten Gitters (G2) orthogonal zueinander polarisiert sind,
- die Teilstrahlenbündel (TS1', TS2') erneut auf das erste Gitter (G1) auftreffen und dort wiedervereinigt werden, so dass anschließend ein resultierendes Signalstrahlenbündel (S) in Richtung der Detektionseinheit (DET; 23) propagiert.

**Claims**

**1.** Optical position measuring device for detecting the relative position of two objects which are movable relative to one another along at least one measurement direction (x) and are connected to a first grating and a second grating, wherein an illumination beam emitted by a light source is split into at least two partial beams at a grating, the partial beams experience different polarization-optical effects and after recombination of the differently polarized partial beams at a grating, from the resulting signal beam, a plurality of phase-shifted, shift-dependent scanning signals are generable in a detection unit, wherein in the scanning beam paths of the partial beams between splitting and recombination no separate polarization-optical components are arranged and at least one of the traversed gratings is configured as a polarization grating for generating the different polarization-optical effects on the partial beams, **characterized**

- **in that** the polarization grating (22; 122; 222; 322; 422; 522) is configured in such a way that orders of diffraction with different polarization states result spatially independently on the polarization grating (22; 122; 222; 322; 422; 522), and
- **in that** the polarization grating (22; 122; 222; 322; 422; 522) has grating structures arranged periodically both along the measurement direction (x) and orthogonally to the measurement direction (x) and wherein the orthogonal periodicity (A_ortho) is selected according to

$$\Lambda\_ortho < 1.5 \cdot \lambda,$$

where

$\Lambda$_ortho := orthogonal periodicity of the grating structures
$\Lambda$ := wavelength of the light source used.

2. Optical position measuring device according to Claim 1, **characterized in that** the polarization grating (22; 122; 222; 322; 422; 522) comprises a plurality of arcuately curved grating structures in the form of grating ridges (22.2; 122.2; 222.2; 322.2; 422.2; 522.2) and grating gaps (22.1; 122.1; 222.1; 322.1; 422.1; 522.1), the longitudinal extension direction of each of which is oriented parallel to the measurement direction (x).

3. Optical position measuring device according to Claim 2, **characterized in that** the polarization grating (22; 122; 222; 322; 422; 522) has strip-shaped grating sections (22a, 22b, 22c, 22d) arranged parallel to the measurement direction (x) periodically with a measurement direction periodicity ($\Lambda$), the longitudinal extension direction of said grating sections being oriented perpendicular to the measurement direction (x), wherein in the grating sections (22a, 22b, 22c, 22d) the grating structures are arranged perpendicular to the measurement direction (x) periodically with the orthogonal periodicity ($\Lambda$_ortho).

4. Optical position measuring device according to Claim 2 or 3, **characterized in that** between adjacent grating sections (22a, 22b, 22c, 22d) of the polarization grating (22; 122; 222; 322; 422; 522)

- a grating gap is arranged, or
- a grating ridge is arranged, or
- a plurality of grating gaps and grating ridges are arranged alternately adjacently.

5. Optical position measuring device according to Claim 2 or 3, **characterized in that** grating structures of adjacent grating sections adjoin one another.

6. Optical position measuring device according to at least one of the preceding claims, **characterized in that** the area filling ratio FV of the polarization grating (22; 122; 222; 322; 422; 522) is selected according to the relation FV < 0.6, wherein the area filling ratio FV is defined as the ratio of the area of the grating ridges (22.2; 122.2; 222.2; 322.2; 422.2; 522.2) in a polarization grating unit cell to the total area of the polarization grating unit cell.

7. Optical position measuring device according to at least one of the preceding claims, **characterized in that** the polarization grating (22; 122; 222; 322; 422; 522) is configured as a reflection phase grating, the grating ridges (22.2; 122.2; 222.2; 322.2; 422.2; 522.2) and grating gaps (22.1; 122.1; 222.1; 322.1; 422.1; 522.1) of which have different reflection properties.

8. Optical position measuring device according to Claim 7, **characterized in that** the reflection phase grating comprises at least the following components:

- a carrier substrate (22.10),
- a planar reflector layer (22.11) arranged on the carrier substrate (22.10),
- a grating structure layer (22.13) arranged above the reflector layer (22.11).

9. Optical position measuring device according to Claim 8, **characterized in that** the grating structure layer (22.13) has a layer thickness d selected according to the relation $d < 0.6 \cdot \lambda$, where $\lambda$ indicates the wavelength of the light source (LQ; 21) used.

10. Optical position measuring device according to Claim 8, **characterized in that** a planar phase shifting layer (22.12) is arranged between the planar reflector layer (22.11) and the grating structure layer (22.12).

11. Optical position measuring device according to Claim 8, **characterized**

- **in that** the reflector layer (22.11) consists of a metallic reflector layer or of a reflective layer stack, and
- **in that** the grating structure layer (22.13) consists of a dielectric material from the group $SiO_2$, $TaO_x$, $TiO_2$, Si, or of a semiconductor material from the group TiN, GaN, or of a layer stack comprising one or more of the aforementioned dielectric materials and one or more of the aforementioned semiconductor materials.

12. Optical position measuring device according to at least one of the preceding claims, **characterized in that** the polarization grating (22; 122; 222; 322; 422; 522.1) is configured in such a way that resulting +/-1st orders of diffraction are polarized orthogonally to one another.

13. Optical position measuring device according to at least one of the preceding claims, **characterized in that**

- a first object is connected to a first grating configured as a reflection phase grating or a transmission phase grating,
- a second object is connected to a second grating, which functions as a polarization grating (22; 122; 222; 322; 422; 522) and is configured as a reflection phase grating,
- wherein a beam (B) emitted by the light source (21) is split into two partial beams (TS1, TS2) at the first grating,
- the partial beams (TS1, TS2) subsequently impinge on the second grating, where each of the two partial beams (TS1, TS2) experiences diffraction and a change in direction, and wherein the partial beams (TS1', TS2') are polarized orthogonally to one another after impinging on the second grating,
- the partial beams (TS1', TS2') are incident on the first grating (10) again and are recombined there, so that a resulting signal beam (S) subsequently propagates in the direction of the detection unit (23).

14. Optical position measuring device according to at least one of Claims 1 - 12, **characterized in that**

- a first object is connected to a first grating (G1), which functions as a material measure (10) and is configured as a reflection phase grating or as a transmission phase grating,
- a second object is connected to a scanning unit (20), wherein the scanning unit (20) comprises the following components:
- a light source (LQ; 21),
- a second grating (G2), which functions as a scanning grating, furthermore acts as a polarization grating (22; 122; 222; 322; 422; 522) and is configured as a reflection phase grating,
- a detection unit (DET; 23),
- wherein a beam (B) emitted by the light source (LQ; 21) is split into two partial beams (TS1, TS2) at the first grating (G1),
- the partial beams (TS1, TS2) subsequently impinge on the second grating (G2), where each of the two partial beams (TS1, TS2) experiences a change in direction, and wherein the partial beams (TS1', TS2') are polarized orthogonally to one another after impinging on the second grating (G2),
- the partial beams (TS1', TS2') are incident on the first grating (G1) again and are recombined there, so that a resulting signal beam (S) subsequently propagates in the direction of the detection unit (DET; 23).

**Revendications**

1. Dispositif optique de mesure de position pour détecter la position relative de deux objets mobiles l'un par rapport à l'autre le long d'au moins une direction de mesure (x), qui sont reliés à un premier réseau et à un deuxième réseau, dans lequel une division d'un faisceau de rayons de lumière émis par une source de lumière en au moins deux faisceaux partiels a lieu sur un réseau, les faisceaux partiels subissant des effets optiques de polarisation différents et, après une recombinaison des faisceaux partiels polarisés différemment sur un réseau, plusieurs signaux de balayage déphasés et dépendants du déplacement étant aptes à être générés à partir du faisceau de signaux résultant dans une unité de détection, aucun composant optique de polarisation séparé n'étant agencé dans les trajets des faisceaux de balayage des faisceaux partiels entre la division et la recombinaison, et au moins un des réseaux traversés étant réalisé sous forme de réseau de polarisation pour produire les différents effets optiques de polarisation sur les faisceaux partiels,

**caractérisé en ce que**

- le réseau de polarisation (22 ; 122 ; 222 ; 322 ; 422 ; 522) est conçu de telle sorte que, indépendamment de l'emplacement sur le réseau de polarisation (22 ; 122 ; 222 ; 322 ; 422 ; 522), des ordres de diffraction avec des états de polarisation différents en résultent, et
- **en ce que** le réseau de polarisation (22 ; 122 ; 222 ; 322 ; 422 ; 522) comprend des structures de réseau agencées périodiquement aussi bien le long de la direction de mesure (x) que perpendiculairement à la direction de mesure (x), et la périodicité orthogonale (Λ _ortho) étant choisie selon la formule

$$\Lambda\_ortho < 1{,}5 \cdot \lambda,$$

dans laquelle

Λ_ortho : = périodicité orthogonale des structures de réseau
Λ : = longueur d'onde de la source de lumière utilisée.

2. Dispositif optique de mesure de position selon la revendication 1, **caractérisé en ce que** le réseau de polarisation (22 ; 122 ; 222 ; 322 ; 422 ; 522) comprend une pluralité de structures de réseau incurvées en forme d'arc sous la forme de barrettes de réseau (22.2 ; 122.2 ; 222.2 ; 322.2 ; 422.2 ; 522.2) et d'espaces de réseau (22.1 ; 122.1 ; 222.1 ; 322.1 ; 422.1 ; 522.1) dont la direction longitudinale de chacun est orientée parallèlement à la direction de mesure (x).

3. Dispositif optique de mesure de position selon la revendication 2, **caractérisé en ce que** le réseau de polarisation (22 ; 122 ; 222 ; 322 ; 422 ; 522) comprend des sections de réseau en forme de bandes (22a, 22b, 22c, 22d) agencées parallèlement à la direction de mesure (x), de manière périodique avec une périodicité de direction de mesure (A), dont la direction longitudinale est orientée perpendiculairement à la direction de mesure (x), les structures de réseau étant agencées dans les sections de réseau (22a, 22b, 22c, 22d) perpendiculairement à la direction de mesure (x), de manière périodique avec la périodicité orthogonale (A _ortho).

4. Dispositif de mesure optique de position selon la revendication 2 ou la revendication 3, **caractérisé en ce qu'**entre des sections de réseau adjacentes (22a, 22b, 22c, 22d) du réseau de polarisation (22 ; 122 ; 222 ; 322 ; 422 ; 522)

- un espace est aménagé entre les réseaux, ou
- une barrette est aménagée entre les réseaux, ou
- plusieurs espaces entre les réseaux et barrettes entre les réseaux sont aménagés de manière alternée.

5. Dispositif optique de mesure de position selon la revendication 2 ou la revendication 3, **caractérisé en ce que** les structures de réseau de sections de réseau adjacentes sont contiguës.

6. Dispositif optique de mesure de position selon au moins une des revendications précédentes, **caractérisé en ce que** le rapport de remplissage de surface FV du réseau de polarisation (22 ; 122 ; 222 ; 322 ; 422 ; 522) est choisi selon la relation FV < 0,6, le rapport de remplissage de surface FV étant défini comme étant le rapport entre la surface des barrettes de réseau (22.2 ; 122.2 ; 222.2 ; 322.2 ; 422.2 ; 522.2) dans une cellule unitaire de réseau de polarisation et la surface totale de la cellule unitaire de réseau de polarisation.

7. Dispositif optique de mesure de position selon au moins une des revendications précédentes, **caractérisé en ce que** le réseau de polarisation (22 ; 122 ; 222 ; 322 ; 422 ; 522) est réalisée sous forme de réseau de phase de réflexion dont les barrettes de réseau (22.2 ; 122.2 ; 222.2 ; 322.2 ; 422.2 ; 522.2) et les espaces de réseau (22.1 ; 122.1 ; 222.1 ; 322.1 ; 422.1 ; 522.1) présentent des propriétés de réflexion différentes.

**8.** Dispositif optique de mesure de position selon la revendication 7, **caractérisé en ce que** le réseau de phase de réflexion comprend au moins les composants suivants :

- un substrat de support (22.10),
- une couche réflectrice plane (22.11) agencée sur le substrat de support (22.10),
- une couche à structure en treillis (22.13) agencée au-dessus de la couche réflectrice (22.11).

**9.** Dispositif optique de mesure de position selon la revendication 8, **caractérisé en ce que** la couche à structure en treillis (22.13) a une épaisseur d choisie selon la relation d < 0,6 · λ, λ indiquant la longueur d'onde de la source de lumière utilisée (LQ ; 21).

**10.** Dispositif optique de mesure de position selon la revendication 8, **caractérisé en ce qu'**une couche de déphasage plane (22.12) est agencée entre la couche réflectrice plane (22.11) et la couche de structure de réseau (22.12).

**11.** Dispositif optique de mesure de position selon la revendication 8, **caractérisé en ce que**

- la couche réflectrice (22.11) est constituée d'une couche réflectrice métallique ou d'un empilement de couches réflectrices, et
- la couche à structure en treillis (22.13) est constituée d'un matériau diélectrique du groupe $SiO_2$, $TaO_x$, $TiO_2$, Si ou d'un matériau semi-conducteur du groupe TiN, GaN ou d'un empilement de couches comprenant un ou plusieurs des matériaux diélectriques précités et un ou plusieurs des matériaux semi-conducteurs précités.

**12.** Dispositif optique de mesure de position selon au moins une des revendications précédentes, **caractérisé en ce que** le réseau de polarisation (22 ; 122 ; 222 ; 322 ; 422 ; 522.1) est conçu de telle sorte que les ordres de diffraction +/-1 résultants soient polarisés orthogonalement les uns par rapport aux autres.

**13.** Dispositif optique de mesure de position selon au moins une des revendications précédentes, **caractérisé en ce que**

- un premier objet est relié à un premier réseau qui est réalisé sous forme de réseau de phase de réflexion ou de réseau de phase de transmission,
- un deuxième objet est relié à un deuxième réseau agissant en tant que réseau de polarisation (22 ; 122 ; 222 ; 322 ; 422 ; 522), qui est réalisé sous forme de réseau de phase de réflexion,
- un faisceau de rayons (B) émis par la source de lumière (21) subissant une division en deux faisceaux partiels (TS1, TS2) au niveau du premier réseau,
- les faisceaux partiels (TS1, TS2) frappent ensuite le deuxième réseau, chacun des deux faisceaux partiels (TS1, TS2) subissant une diffraction et un changement de direction, et les faisceaux partiels (TS1', TS2') étant polarisés orthogonalement l'un par rapport à l'autre après avoir frappé le deuxième réseau,
- les faisceaux partiels (TS1', TS2') frappent à nouveau le premier réseau (10) et y sont recombinés, de sorte qu'un faisceau de signaux résultant (S) se propage ensuite en direction de l'unité de détection (23).

**14.** Dispositif optique de mesure de position selon au moins une des revendications 1 à 12, **caractérisé en ce que**

- un premier objet est relié à un premier réseau (G1) servant de mesure matérialisée (10), qui est conçu sous forme de réseau de phase de réflexion ou de réseau de phase de transmission,
- un deuxième objet est relié à une unité de balayage (20), l'unité de balayage (20) comprenant les composants suivants :
- une source de lumière (LQ ; 21),
- un deuxième réseau (G2) servant de réseau de balayage, qui agit en outre en tant que réseau de polarisation (22 ; 122 ; 222 ; 322 ; 422 ; 522) et qui est conçu sous forme de réseau de phase de réflexion,
- une unité de détection (DET ; 23),
- un faisceau de rayons (B) émis par la source de lumière (LQ ; 21) subissant, au niveau du premier réseau (G1), une division en deux faisceaux partiels (TS1, TS2),
- les faisceaux partiels (TS1, TS2) frappent ensuite le deuxième réseau (G2), dans lequel chacun des deux faisceaux partiels (TS1, TS2) subit un changement de direction et où les faisceaux partiels (TS1', TS2') sont polarisés orthogonalement l'un par rapport à l'autre après avoir frappé le deuxième réseau (G2),
- les faisceaux partiels (TS1', TS2') frappent à nouveau le premier réseau (G1) et y sont recombinés, de sorte qu'un faisceau de signaux résultant (S) se propage ensuite en direction de l'unité de détection (DET ; 23).

# FIG. 1

Stand der Technik

# FIG. 2

# FIG. 3a

# FIG. 3b

FIG. 4

FIG. 5

FIG. 6a

22a   22b   $\wedge$   22d

22

y
z ● → x

22.2a   22.2b   22.2c
22c

FIG. 6b

$\wedge$

22

$\wedge\_ortho$

22.2a

22b

22.1   22.2   22.2b

y
z ● → x

FIG. 6c

22.2   22.1   22.13

22

22.12
22.11
22.10

z
y ● → x

## FIG. 7a

122  122.2 122.1

y
z  x

## FIG. 7b

222.1  222.2

y
z  x

222

## FIG. 7c

322.2a  322.1  322.2

y
z  x

322  322.2b

## FIG. 7d

422.1  422.2

y
z  x

422

## FIG. 7e

522.1  522.2

y
z  x

522  522.2b  522.2a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0481356 A2
- WO 2008138501 A1
- DE 102010063253 A1
- DE 102014211004 A1
- EP 2450672 A2